## Europäisches Patentamt
## European Patent Office
## Office européen des brevets

(19)

(11) Publication number: **0 253 714**
**A2**

(12)

# EUROPEAN PATENT APPLICATION

(21) Application number: 87401566.2

(22) Date of filing: 03.07.87

(51) Int. Cl.⁴: **A 01 N 43/54**
A 01 N 43/653, A 01 N 43/76,
A 01 N 47/38
//(A01N43/54,43:08,37:46),
(A01N43/653,43:08,37:46),
(A01N43/76,43:653,43:54),
(A01N47/38,43:76,43:08,37:46)

(30) Priority: 07.07.86 IT 2104586

(43) Date of publication of application:
20.01.88 Bulletin 88/03

(84) Designated Contracting States:
AT BE CH DE ES FR GB LI NL SE

(71) Applicant: Montedison S.p.A.
31, Foro Buonaparte
I-20121 Milan (IT)

(72) Inventor: Gozzo, Franco
36/B via Pascoli
I-20097 San Donato Milanese Milan (IT)

Valcamonica, Carlo
94 viale Umbria
I-20135 Milan (IT)

Pizzingrilli, Gianfranco
1, via Giulio Uberti
I-20129 Milan (IT)

Garavaglia, Carlo
7, Piazza Vittoria
I-20012 Cuggiono Milan (IT)

Mirenna, Luigi
4, via Gamboloita
I-20139 Milan (IT)

(74) Representative: Hirsch, Marc-Roger
Cabinet Hirsch 34 rue de Bassano
F-75008 Paris (FR)

(54) **Fungicidal mixtures.**

(57) Compositions consisting of synergic fungicidal mixtures comprising at least one compound belonging to the group comprising inhibitors of ergosterol biosynthesis, which inhibitors are selected among those comprising triazole, imidazole and pyrimidine derivatives, with at least one compound belonging to the class of phenylamides having an antiperonosporic activity, which latter compound is selected from the group comprising alanine, butyrolactone and oxazolidinone derivatives.

The disclosed synergic mixtures may effectively be used for the protection of plants of parts thereof, from attack by Oomyces phytopathogenous fungi, especially those belonging to the order of Peronosporales, in vine, potato, tomato, tobacco cultivations.

EP 0 253 714 A2

**Description**

FUNGICIDAL MIXTURES

The present invention relates to compositions consisting of fungicidal mixtures to be used in fighting phytopathogenous fungi as well as to the use of said compositions for the protection of plants, or parts thereof, from attack by Oomyces phytopathogenous fungi, especially those belonging to the order of Peronosporales,

In particular, the present invention, concerns the preparation and use of compositions consisting of synergic mixtures containing phenylamides and inhibitors of ergosterol biosynthesis, having a fungicidal action against the phytopathogenous fungi belonging to the class of Oomyces that do not synthetize any sterol in their organism.

Still more precisely, the present invention relates to the use of synergic mixtures containing phenylamides and inhibitors of the ergosterol biosynthesis, the latter having an action inhibiting the carbon demethylation in position 14 of the sterolic skeleton, during the biosynthesis process wherein lanosterol is converted into ergosterol through numerous steps.

The synergic mixtures according to the present invention, may be effectively used for fighting phytopathogenous fungi belonging to the class of Oomyces, in particular those of Peronosporales order, in the cultivation of potatoes, vine, tomatoes, tobacco, etc.

A great number of compounds, having fungicidal action, are known in the prior art; such compounds have the common property of acting on the phytopathogenous fungic micro-organisms as inhibitors of the ergosterol biosynthesis. Among the compounds currently available on the market, can be cited those belonging to the classes of triazole derivatives (such as, for instance, triadimefon, diclorobutrazole, propiconazole, penconazole, PP450), imidazole derivatives (such as, for instance, prochloraz) and pyrimidine derivatives (such as, for instance, fenarimol).

The specific biochemical action, characteristic and common to the above mentioned triazole, imidazole and pyrimidine derivatives, consists in inhibiting the carbon oxidative demethylation in position 14 of the sterolic skeleton, during the biosynthesis process leading, through numerous steps, to the conversion of lanosterol into ergonosterol.

The pathogenous fungi which are sensitive to the aforesaid inhibition, and therefore are effectively attacked by the action of the aforesaid inhibitors of the ergosterol biosynthesis, are those synthesizing sterol in their organism.

In fact, oidium and rust are the fungus micro-organisms that are checked most effectively.

Of course the phytopathogenous fungi belonging to the class of Oomyces, in particular those belonging to the order of Peronosporales, do not present the aforesaid fungicidal action, since they do not synthesize any sterol in their organisms.

This important group of phytopathogenous fungi, however, is selectively checked by a series of systemic fungicides, belonging to the chemical class of the so-called "phenylamides".

A restricted number of products belonging to the following families are included under said name:
- alanine derivatives (such as, for instance, benalaxyl, matalaxyl);
- butyrolactone derivatives (such as, for instance, ofurace);
- oxazolidinone derivatives (such as, for instance, oxadixyl).

These fungicides have an action mechanism that seems to be substantially connected with the inhibition of a specific RNA-polymerase and makes such fungicides selectively effective only towards the Oomyces.

To resume, two groups of fungicidal agents, are involved, those having an action inhibiting the oxidative demethylation in position 14 (fungicidal agents which are inactive towards the Oomyces) and those having an action inhibiting the RNA-polymerase (fungicidal agents which are active towards the Oomyces), both being completely distinct from the point of view of inhibition and application.

An object of the present invention is to provide compositions formed of synergic fungicide mixtures, that may be effectively applied for protecting plants or parts or fruits of said plants, from attack by phytopathogenous fungi, in particular those belonging to the class of Oomyces.

A further object of the present invention is to provide a method for the selective protection of plants, for instance vine, potato, tomato, tobacco, etc., from attack by phytopathogenous fungi, in particular those belonging to the class of Oomyces, by using the compositions constituted by the synergic mixtures according to the invention.

These and still other objects, that will appear more clearly to those skilled in the art from the following disclosure, are achieved, according to the present invention, by using mixtures consisting of at least one compound belonging to the above described classes of inhibitors of demethylation in postion 14 during ergosterol biosynthesis (from now on called "Compound A" in the present disclosure) with at least one compound belonging to the class of the aforesaid "phenylamides" having known antiperonosporic activity (from now on called in the present disclosure as "Compound B"), which mixtures are endowed with a synergic effect in the selective protection of plants or of parts or fruits of said plants, from attack by the phytopathogenous fungi belonging in particular to the class of Oomyces, especially to the order of Peronosporales.

In other terms, according to the present invention, the protection of the plants from attack by phytopathogenous fungi, in particular those belonging to the class of Oomyces is surprisingly obtained by adding, to a compound active towards the Oomyces ("phenylamide"), a compound per se non-active towards the Oomyces; the fungicide characteristics of the first compound on the cultivations, when they are attcked by Oomyces, is thus enhanced.

According to known literature, the aforesaid synergic action, that has been developed by the Applicant in the mixtures formed of "compounds A + B", is completely unforeseable, considering the quite different action mechanisms and the targets of the two kinds of fungicides.

The current knowledge and the expectations that could be reasonably expected on behalf of those skilled in the art, have been explicitly set forth in the prior literature, see e.g. Pestic. Biochem. and Physiol. 22, 262-275, 1984 where any synergism due to an inhibitor of the ergosterol biosynthesis, (compound A) is considered as unlikely.

Therefore, the present invention may be considered as surprisingly overcoming a prejudice resulting from information available to those skilled in the art, which information should normally have deterred any further research for this purpose being carried out.

Within the scope of the present invention, by the expression "synergic effect", is meant an activity obtained by means of the mixture of "compounds A + B" with results higher than those that could be expected, in a foreseeable way, as a consequence of the summation of the activities noted by applying the single compounds on the plant, by employing the same doses and by working under comparable conditions, as will be shown hereinafter.

In particular, according to the present invention, it was noted tht the addition of a compound of type A (inactive towards Oomyces), as above defined and better specified hereinafter, to a compound of type B, characterized by the definition as indicated above and further specified hereinafter, considerably increases the fungicidal activity of the latter, towards the Oomyces.

Such synergic effect will be shown by means of the experimental results summarized in Tables 1-3 of the appended examples which concern results obtained on plants inoculated with phytopathogenous fungi belonging to the order of Peronosporales.

The synergic effect was shown by using, as compound A, the following compounds belonging to chemical classes inhibiting the demethylation in position 14 in ergosterol biosynthesis:

Triazole derivatives:

triadimefon 1-(4-chlorophenoxy)3,3-dimethyl-1-(1H-1,2,4-triazole-1-il)) butanone (Bayer).

diclobutrazol 1-(2-2,4-dichlorophenyl)-4,4-dimethyl-2-(1-H-1,2,4-triazole-1-il)pentane-3-ol (I.C.I.),

PP450 1-(2-fluorophenyl)-1-(4-fluorophenyl)-2-(flutriafol)-1,2,4-triazole-1-il)ethane-1-ol (I.C.I.);

M.13144 1-(4-chlorophenyl-2-(1,2,4-triazole-1-il)-4,4-(uniconazole)dimethyl-1-pentene-3-ol (Sumitomo).

Imidazole derivatives:

prochloraz N-propyl-N{2-(2,4,6-trichlorophenoxy)-ethyl}imidazole-1-carboxyamide (FBC).

Pyrimidine derivatives:

fenarimol α-(2-chlorophenyl)-α-(4-chlorophenyl)-5-pyrimidine methanol (Eli Lilly).

As compounds of type B were tested the following fungicides which belong to the three above-mentioned classes:

alaninates:

benalaxyl methyl-N-(2,6-dimethylphenyl)-N-(phenylacetyl)-DL-alaninate (Montedison).

metalaxyl methyl N-(2,6-dimethylphenyl)-N-(methoxyacetyl)-DL-alaninate (Ciba Geigy).

butyrolactone derivatives:

ofurace 2-chloro-N-(2,6-dimethylphenyl)-N-(tetrahydro-2-oxo-3-furanyl)acetamide (Chevron).

oxozolidinone derivatives:

oxadixyl 2-methoxy-N-(2-oxo-1,3-oxazolidin-3-il)-acet-2'6'-xylidine (Sandoz).

The limits of the ratios by weight, within which the dosage of compounds A and B should to be formulated and within the range of which the synergic effect is noted, may vary widely, depending to the operating environmental conditions, infection degree and other parameters.

For practical operating purposes, however, effective results are achieved with values of A/B ratio ranging between about 0.5/1 and 2/1.

Moreover, the A + B synergic mixtures according to the present invention, are compatible with the presence of a third or even more other components C, D, etc., which may be advantageously included in particular formulations, in order to widen the action spectrum and/or to lower the risk of producing resistance phenomena towards the systemic fungicides.

For this purpose, a component C may be selected among the unsystemic, unspecific fungicides, such as, for example, dithiocarbamates, including:

mancozeb: manganese, zinc ethylene-bis-(dithiocarbamate), a polymeric complex;

zineb: zinc ethylene-bis-(dithiocarbamate);

maneb: manganese ethylene-bis-(dithiocarbamate);

phtalimides, copper salts, tin derivatives and so on.

The synergic fungicidal mixtures according to the present invention are prepared in a conventional way, by methods and apparatus generally used for the preparation of formulations that are employed in agronomical applications.

As an advantageous consequence connected with the noted synergic effect according to the present invention, the cultures to be protected may be treated by applying a mixture, of any convenient formulation, consisting of "Compound A" and "Compound B", while using smaller doses, as compared to those generally used in agronomical practice.

This advantage proves to be particularly important, not only from an economic point of view, but also for preventing resistance phenomena, such as those occurring in connection with very specific systemic fungicides.

Another advantage consists in the versatility of the mixtures of compounds A + B according to the present invention, which versatility may be effectively exploited for checking diseases caused by a much wider spectrum of phytopathogenous fungi, which do not synthesize any ergosterol.

The present invention will now be described more precisely in the following examples given by way of illustration.

The demonstration of the synergic activity of the compositions or mixtures, according to the present invention, was determined as far as vine Peronospora (Plasmopara viticola (Bet C) Berl et de Toni) and potato Peronospora (Phytophthora infestants (Monts) De Bary) are concerned, under the following operating conditions.

Preventive activity on vine Peronospora.

(Plasmopara viticola (Bet C) Berl et de Toni)

Vine leaves cv. Dolcetto, grown in pot in an environment conditioned at 25°C and 60% R.H., were sprinkled on both leaf faces with a water-acetone solution of the products being tested (20% acetone vol./vol.).

15 days after the treatment the leaves were sprinkled on the lower leaf face with an aqueous suspension of conidia of Plasmopara viticola (200.000 conidia/cc); the plants, after having been kept for 24 hours in an environment saturated with humidity, at 21°C, were brought to 70% R.H. and 21°C during the incubation period (7 days). Finally the infection rate was determined, by means of indice of a valuation scale ranging from 100 (sound plant) to 0 (completely infected plant).

Preventive activity on potato Peronospora (Phytophthora infestants (Mont) De Bary).

Leaves of potato plants cv. SIEGLINDER grown in pot in an environment conditioned at 24°C and 60% R.H. were sprinkled with a water-acetone solution (20% acetone vol/vol) of the products being tested. After 7 days the infection was caused by sprinkling the leaf faces with an aqueous suspension of conidia of Phytophthora infestants (25.000 conidia/cc); the plants, after having been kept 24 hours in an environment saturated with humidity at 20°C, were brought, during the incubation period (4 days) into another environment conditioned at 70% R.H. and 24°C.

At the end of said period the infection rate was determined by means of a valuation scale ranging between 100 (sound plant) and 0 (completely infected plant).

The chemical definitions, corresponding to the technical common names, have already been given herein above.

EXAMPLE 1

Demonstration of synergic activity between an inhibitor of ergosterol biosynthesis, selected from the group comprising triazole derivatives (compound A = triadimefon) and a phenylamide, selected from the group comprising alanine derivatives (compound B = benalaxyl, metalaxyl), butyrolactone derivatives (Compound B = ofurace), oxazolidinone derivatives (compound B = oxadixyl).

Disease caused by:

Pathogeneous fungus : Phytophthora infestans

Culture : Potato

Action : Preventive, 7 days after the treatment.

TABLE 1

| Compound A | g/l | Compound B | g/l | activity % |
|---|---|---|---|---|
| triadimefon | 0 | benalaxyl | 0 | 0 |
| " | 0.2 | " | 0 | 0 |
| " | 0 | " | 0.1 | 37 |
| " | 0.2 | " | 0.1 | 95 |
| " | 0 | metalaxyl | 0 | 0 |
| " | 0.2 | " | 0 | 0 |
| " | 0 | " | 0.1 | 47 |
| " | 0.2 | " | 0.1 | 67 |
| " | 0 | ofurace | 0 | 0 |
| " | 0.2 | " | 0 | 0 |
| " | 0 | " | 0.1 | 57 |

TABLE 1 (cont'd)

| Compound A | g/l | Compound B | g/l | activity % |
|---|---|---|---|---|
| triadimefon | 0.2 | ofurace | 0.1 | 70 |
| " | 0 | oxadixyl | 0 | 0 |
| " | 0.2 | " | 0 | 0 |
| " | 0 | " | 0.1 | 37 |
| " | 0.2 | " | 0.1 | 57 |

EXAMPLE 2

Demonstration of synergic activity between an inhibitor of ergosterol biosynthesis, selected from the group comprising triazole derivatives (compound A = diclobutrazol; M 13144; PP450), imidazole derivatives (compound A = prochloraz) or pyrimidine derivatives (compound A = fenarimol) and a phenylamide, selected from the group comprising alanine derivatives (compound B = benalaxyl; metalaxyl).

Disease caused by:

Pathogeneous fungus : phytophthora infestants
Culture : Potato
Action : Preventive, 7 days after the tretment.

TABLE 2

| Compound A | g/l | Compound B | g/l | activity % |
|---|---|---|---|---|
| diclobutrazol | 0 | benalaxyl | 0 | 0 |
| " | 0.05 | " | 0 | 0 |
| " | 0.2 | " | 0 | 0 |
| " | 0 | " | 0.1 | 35 |
| " | 0.05 | " | 0.1 | 73 |
| " | 0.2 | " | 0.1 | 83 |
| " | 0 | metalaxyl | 0 | 0 |
| " | 0.05 | " | 0 | 0 |

## TABLE 2 (cont'd)

| Compound A | g/l | Compound B | g/l | activity % |
|---|---|---|---|---|
| diclobutrazol | 0.2 | metalaxyl | 0 | 0 |
| " | 0 | " | 0.1 | 45 |
| " | 0.05 | " | 0.1 | 74 |
| " | 0.2 | " | 0.1 | 85 |
| M.13144 | 0 | benalaxyl | 0 | 0 |
| " | 0.05 | " | 0 | 0 |
| " | 0.2 | " | 0 | 0 |
| " | 0.05 | " | 0.1 | 70 |
| " | 0.2 | " | 0.1 | 79 |
| " | 0 | metalaxyl | 0 | 0 |
| " | 0.05 | " | 0 | 0 |
| " | 0.2 | " | 0 | 0 |
| " | 0.05 | " | 0.1 | 70 |
| " | 0.2 | " | 0.1 | 80 |
| PP 450 | 0 | benalaxyl | 0 | 0 |
| " | 0.05 | " | 0 | 0 |
| " | 0.2 | " | 0 | 0 |
| " | 0.05 | " | 0.1 | 36 |
| " | 0.2 | " | 0.1 | 57 |
| PP 450 | 0 | metalaxyl | 0 | 0 |
| " | 0.05 | " | 0 | 0 |
| " | 0.2 | " | 0 | 0 |
| " | 0.05 | " | 0.1 | 47 |
| " | 0.2 | " | 0.1 | 52 |

## TABLE 2 (cont'd)

| Compound A | g/l | Compound B | g/l | activity % |
|---|---|---|---|---|
| prochloraz | 0 | benalaxyl | 0 | 0 |
| " | 0.05 | " | 0 | 0 |
| " | 0.2 | " | 0 | 0 |
| " | 0.05 | " | 0.1 | 36 |
| " | 0.2 | " | 0.1 | 50 |
| " | 0 | metalaxyl | 0 | 0 |
| " | 0.05 | " | 0 | 0 |
| " | 0.2 | " | 0 | 0 |
| " | 0.05 | " | 0.1 | n.d. |
| " | 0.2 | " | 0.1 | 47 |
| fenarimol | 0 | benalaxyl | 0 | 0 |
| " | 0.05 | " | 0 | 0 |
| " | 0.2 | " | 0 | 0 |
| " | 0.05 | " | 0.1 | 36 |
| " | 0.2 | " | 0.1 | 65 |
| " | 0 | metalaxyl | 0 | 0 |
| " | 0.05 | " | 0 | 0 |
| " | 0.2 | " | 0 | 0 |
| " | 0.05 | " | 0.1 | 52 |
| " | 0.2 | " | 0.1 | 72 |

EXAMPLE 3

Demonstration of synergic activity between an inhibitor of ergosterol biosynthesis, selected from the group comprising triazole derivatives (compound A = triadimefon), and a phenylamide selected from the group comprising alanine derivatives (compound B = benalaxyl).

Disease caused by:

Pathogeneous fungus : Plasmopara viticola

Culture : Vine

Action : Preventive, 15 days after the treatment.

## TABLE 3

| Compound A | g/l | Compound B | g/l | activity % |
|------------|------|------------|------|------------|
| triadimefon | 0 | benalaxyl | 0 | 0 |
| " | 0.05 | " | 0 | 0 |
| " | 0.10 | " | 0 | 0 |
| " | 0 | " | 0.10 | 77 |
| " | 0.05 | " | 0.10 | 100 |
| " | 0.10 | " | 0.10 | 100 |

**Claims**

1.- A composition to be used for protecting plants and parts thereof from attack by phytopathogeneous fungi belonging to the class of Oomyces, characterized in that it formed of a synergic fungicidal mixture comprising at least one compound (A) belonging to the group of ergosterol biosynthesis inhibitors, specifically acting on the oxidative demethylation in position 14, and at least one compound (B) of the group of "phenylamides" having antiperonosporic activity, selected from the group comprising alanine, butyrolactone and oxazolidinone derivatives.

2.- A composition consisting of a synergic fungicidal mixture, according to claim 1, characterized in that the compound inhibiting ergosterol biosynthesis (A) is selected among the compounds inhibiting ergosterol which belong to the group comprising triazole, imidazole and pyrimidine derivatives.

3.- A composition consisting of a synergic fungicidal mixture, according to claim 1 or 2, characterized in that the compound inhibiting ergosterol biosynthesis (A) is preferably selected from the group comprising triadimefon, diclobutrazol, flutriafol, 1-(4-chlorophenyl)-2-(1,2,4-triazole-1-il)-4, 4-dimethyl-1-pentene-3-ol; prochloraz and fenarimol and the compound belonging to the group of "phenylamides" (B) is preferably selected from the group comprising benalaxyl, metalaxyl, ofurace and oxadixyl.

4.- A composition consisting of a synergic fungicidal mixture, according to any one of the preceding claims, characterized in that the ratio by weight between the compound having an activity inhibiting the ergosterol biosynthesis (A) and phenylamidic compound (B) ranges between about 0.5:1 and 2:1.

5.- A composition consisting of a synergic fungicidal mixture, according to any of one of claims 1 to 4, characterized in that said composition also contains at least one further component allowing to integrate the action spectrum and/or to lower the resistance phenomena.

6.- Use of a composition according to any of one of claims 1 to 5, for protecting plants and parts thereof from attack of phytopathogeneous fungi belonging to the class of Oomyces.

7.- Use of a composition according to any of one of claims 1 to 5, for protecting plants and parts thereof from attack of phytopathogeneous fungi belonging to the order of Peronosporales.

8.- A method for protecting plants, parts or fruits of said plants, from attack by phytopathogeneous fungi belonging to the class of Oomyces, characterized in that use is made of a composition as claimed in claims 1 to 5.